# FASCICULE DE BREVET EUROPEEN

(11) **EP 2 652 533 B1**
(45) Date de publication et mention de la délivrance du brevet: **19.09.2018**
(21) Numéro de dépôt: 11817334.3
(22) Date de dépôt: 14.12.2011
(51) Int. Cl.: G02B 1/06, B29D 11/00, G02C 7/10, G02C 7/08

(54) **ELEMENT OPTIQUE COMPRENANT UN AEROGEL SANS FISSURE**
OPTISCHES ELEMENT MIT EINEM RISSFREIEN AEROGEL
OPTICAL ELEMENT COMPRISING A CRACK-FREE AEROGEL

(30) Priorité: 16.12.2010 FR 1060614
(43) Date de publication de la demande: 23.10.2013
(73) Titulaire: Essilor International, 94220 Charenton-le-Pont (FR); Centre National de la Recherche Scientifique (C.N.R.S.), 75794 Paris Cedex 16 (FR)
(72) Inventeur: BIVER, Claudine, F-94220 Charenton-le-Pont (FR); CANO, Jean-Paul, F-94220 Charenton-le-Pont (FR); COURSON, Rémi, F-94220 Charenton-le-Pont (FR); CALAS-ETIENNE, Sylvie, F-34095 Montpellier Cedex 5 (FR); ETIENNE, Pascal, F-34095 Montpellier Cedex 5 (FR)
(74) Mandataire: Cabinet Plasseraud
(86) Numéro de dépôt international: PCT/FR2011/052983
(87) Numéro de publication internationale: WO 2012/080658

(56) Documents cités:
- FR-A1- 2 888 950
- US-A1- 2006 154 044
- SCHOTTNER G: "Hybrid sol-gel derived polymers: applications of multifunctional materials", CHEMISTRY OF MATERIALS, AMERICAN CHEMICAL SOCIETY, WASHINGTON, US, vol. 13, no. 10, 1 janvier 2001 (2001-01-01), pages 3422-3435, XP002526961, ISSN: 0897-4756, DOI: DOI:10.1021/CM011060M [extrait le 2001-10-15]

## Description

### DOMAINE TECHNIQUE DE L'INVENTION

La présente invention concerne un procédé de fabrication d'un élément optique comprenant à sa surface des cellules remplies d'un aérogel sans fissure.

Dans la demande de brevet français FR 2 872 589 A1, la Demanderesse a décrit un procédé de réalisation d'un élément optique transparent comprenant au moins un ensemble de cellules juxtaposées parallèlement à la surface de cet élément, chaque cellule pouvant contenir une substance ayant des propriétés optiques.

De façon avantageuse, cette substance peut être un liquide ou un mélange de plusieurs liquides dont l'indice de réfraction a une valeur fixée. Si l'on remplit les cellules avec des liquides ayant différents indices de réfraction, on peut créer un élément optique dont l'indice de réfraction varie spatialement. L'amplitude de cette variation spatiale de l'indice de réfraction de l'élément optique dépend alors de la différence maximale d'indice de réfraction entre les liquides remplissant les cellules. Pour disposer d'éléments optiques ayant une grande variation d'indice de réfraction, il faut donc disposer de liquides ayant de grandes différences d'indice de réfraction. Or actuellement, la différence d'indice de réfraction accessible avec des liquides disponibles classiques vaut au maximum 0,2 à 0,3.

Une solution envisagée pour atteindre des différences d'indices de réfraction plus importantes est de laisser vides certaines cellules. La différence alors obtenue entre l'indice de réfraction du liquide et celle de l'air est plus grande, de l'ordre de 0,6 à 0,7.

Toutefois, des essais ont révélé que la présence de cellules vides, c'est à dire remplies uniquement d'air, entraine des problèmes techniques lors de l'étape de scellement des cellules.

La Demanderesse a proposé de remplir les cellules avec un aérogel. Les aérogels sont des matériaux ultraporeux, dont la porosité atteint typiquement au moins 75 % de leur volume. Cette grande porosité confère à ces solides des propriétés intéressantes, en particulier un très faible indice de réfraction, proche de celui de l'air (n < 1,35). Ils sont également très légers. De manière avantageuse, les aérogels de silice peuvent être transparents. Il est connu en effet que la transparence des aérogels est directement liée aux conditions de synthèse du gel, et l'homme du métier sait mettre en oeuvre les procédés adéquats pour obtenir un aérogel transparent. Les aérogels peuvent ensuite être sélectivement imprégnés par différents liquides ayant des indices de réfraction prédéfinis, ou bien ils peuvent être laissés vides, c'est-à-dire remplis d'air, de façon à créer une différence d'indice de réfraction importante.

### ART ANTERIEUR

Les méthodes classiques utilisées dans l'art antérieur pour fabriquer des aérogels comprennent les étapes suivantes : la préparation d'un sol comprenant un alcoxysilane hydrolysé, le dépôt de ce sol dans le contenant voulu, une étape de maturation aboutissant à la formation d'un gel, puis le séchage supercritique du gel obtenu.

Un séchage supercritique est un séchage bien connu qui consiste à faire évaporer un solvant en le faisant passer de la phase liquide à la phase supercritique puis à la phase gazeuse. La phase supercritique d'un fluide est située au-delà de la température critique et au-delà de la pression critique de ce fluide. Les propriétés physiques d'un fluide en phase supercritique, en particulier sa densité et sa viscosité, sont intermédiaires entre celles des liquides et celles des gaz.

Il arrive que le solvant contenu dans les pores du gel possède un point critique (couple température critique (Tc) et pression critique (Pc)) bien trop élevé par rapport à ce que le contenant du gel est capable de supporter. Dans ces cas, traditionnellement, on remplace le solvant contenu dans les pores du gel par un autre solvant plus approprié, en particulier le CO₂, et parfois l'éthanol et l'eau. Ces solvants ont les points critiques suivants :
- eau : Tc = 373 °C, Pc = 221 bars
- éthanol : Tc = 241 °C, Pc = 61 bars
- CO₂ : Tc = 31 °C, Pc = 74 bars.

Cette technique de séchage supercritique permet d'obtenir un solide possédant une structure extrêmement légère, presque sans retrait du solide. Les procédés décrits dans l'art antérieur permettent d'obtenir des aérogels avec des porosités très élevées, supérieures à 95%, et pouvant parfois atteindre 99% ou plus.

Cependant, à cause de leur très grande porosité, les aérogels sont considérés comme des matériaux fragiles. La production classique des aérogels, ainsi que leur utilisation, peut s'accompagner d'une fissuration. Les fissures peuvent par exemple prendre la forme de craquelures visibles à la surface de l'aérogel.

Des fissures peuvent apparaître dans l'aérogel lors de sa fabrication, plus particulièrement lors du séchage supercritique du gel.

De nouvelles fissures peuvent apparaître ou des fissures préexistantes peuvent se développer lors de l'imprégnation de l'aérogel avec un liquide. En effet, la pénétration d'un liquide dans l'aérogel peut créer des tensions capillaires suffisantes pour induire la fissuration de l'aérogel.

Or, pour les applications dans le domaine de l'optique, il est nécessaire d'éviter la fissuration des aérogels afin de garantir la meilleure transparence possible des matériaux.

Une autre technique, décrite par exemple dans le brevet US 5 948 482, permet de fabriquer des matériaux de type aérogel sous forme de couche sans utiliser de séchage supercritique. Cette technique consiste à préparer un gel à partir d'un sol d'alcoxysilane, puis à faire réagir ce gel avec un agent de dérivation, de préférence un silane dans de l'hexane, et à déposer le fluide obtenu par immersion (dip-coating) ou centrifugation (spin-coating) sous forme de couche.

Cependant, les matériaux obtenus selon cette technique présentent une porosité de l'ordre de 60%, et en conséquence un indice de réfraction trop élevé pour les applications recherchées. Il est possible d'augmenter la porosité jusqu'à hauteur de 90% en effectuant un traitement thermique à 450 °C. Un tel traitement thermique endommagerait cependant l'élément optique sur lequel on veut fabriquer l'aérogel, en particulier si cet élément optique contient des polymères organiques.

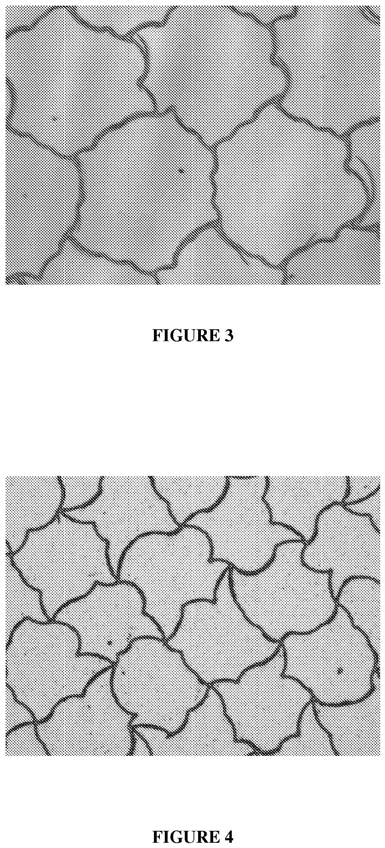

Le document FR 2888950 décrit un procédé de production d'un composant optique transparent qui comprend la formation sur un substrat d'un réseau de parois absorbantes pour délimiter les cellules parallèlement à ladite surface du composant (figure 3), un remplissage collectif ou individuel des cellules avec une substance à propriété optique sous forme liquide ou de gel, et la fermeture des cellules sur leur côté opposé au substrat.

En revanche, le document FR 2888950 reste silencieux quant à la nature exacte de la substance à propriété optique. Il ne divulgue notamment nullement le remplissage par une solution en tant que précurseur d'aérogel telle que revendiquée dans la présente demande, comprenant :
Un solvant organoaqueux ;
Au moins un polymère organique soluble dans ledit solvant, dont la masse moléculaire moyenne en poids est supérieure à 10000 g/mol
Au moins un alcoxysilane choisi dans le groupe de le groupe choisi dans le groupe constitué par les (alkyl en C1 à C3) tri(alcoxy en C1 à C3) silanes et les tétra(alcoxy en C1 à C3) silanes et leurs mélanges.

Le document FR 2888950 ne divulgue donc pas non plus un élément optique comprenant à sa surface des cellules remplies d'un aérogel comme dans la présente demande.

Le document US 2006/154044 décrit la formation par voie sol-gel d'un coating anti-réflectif sur un composant optique, le dit coating étant constitué d'une couche d'un aérogel de silice poreux à base de TMOS ou TEOS. Ce document US 2006/154044 ne divulgue pas non plus, ni ne suggère l'utilisation d'un aérogel tel que défini dans la présente invention.

Le but de la présente invention est donc de mettre au point un procédé de fabrication d'un élément optique comprenant à sa surface des cellules remplies d'un aérogel qui ne se fissure ni lors de sa fabrication, ni lors d'une étape postérieure d'imprégnation de l'aérogel par un liquide.

### RESUME DE L'INVENTION

La présente invention a par conséquent pour objet un procédé de fabrication d'un élément optique transparent comprenant les étapes successives consistant à :
a) mettre à disposition un élément optique comprenant à sa surface au moins une cellule ouverte ;
b) effectuer un traitement de surface de ladite cellule afin d'augmenter la mouillabilité de sa surface ;
c) préparer une solution comprenant :
   - un solvant organoaqueux, de préférence un mélange d'eau et d'un alcool soluble dans l'eau, de façon plus préférée un mélange eau/éthanol ;
   - au moins un polymère organique, soluble dans le dit solvant, dont la masse moléculaire moyenne en poids est supérieure à 10 000 g/mol, de préférence comprise entre 30 000 et 1 000 000 g/mol ;
   - au moins un alcoxysilane choisi dans le groupe constitué par les (alkyl en C₁ à C₃)-tri(alcoxy en C₁ à C₃)silanes et les tétra(alcoxy en C₁ à C₃)silanes et leurs mélanges ;
d) ajouter un catalyseur d'hydrolyse acide ou basique à la solution de façon à obtenir un sol ;
e) déposer le sol dans la cellule préalablement traitée avant que le point de gel du sol ne soit atteint et fermer la cellule remplie à l'aide d'un film ;
f) laisser reposer l'élément optique dans une atmosphère alcoolique durant entre 15 minutes et 5 heures afin d'obtenir la maturation du gel ;
g) retirer le film fermant la cellule en milieu alcoolique ;
h) effectuer dans un autoclave le séchage supercritique du gel contenu dans la cellule de manière à obtenir un aérogel.

La présente invention a également pour objet l'élément optique, obtenu par ce procédé.

Cet élément optique peut en outre être soumis à un procédé, également objet de la présente invention, comprenant une étape consistant à imprégner l'aérogel contenu dans la au moins une cellule de l'élément optique avec un liquide, puis une étape consistant à fermer la cellule imprégnée avec un moyen pour isoler et protéger le contenu de la cellule de l'atmosphère extérieure.

L'élément optique transparent renfermant un aérogel imprégné obtenu par ce procédé est aussi un objet de la présente invention.

### DESCRIPTION DETAILLEE

Au sens de la présente invention, un élément optique est qualifié de « transparent » lorsqu'un objet qui est observé à travers cet élément est perçu sans perte significative de contraste, autrement dit, lorsqu'une image peut être formée à travers l'élément optique avec une qualité suffisante, en termes de contraste et de netteté notamment.

L'étape a) du procédé selon l'invention consiste à mettre à disposition un élément optique comprenant à sa surface au moins une cellule ouverte. De tels éléments optiques ont déjà été décrits dans l'art antérieur, en particulier dans les demandes de brevet FR 2 872 589, EP 1 904 884, EP 1 904 885, EP 1 904 887, EP 1 904 888. L'homme du métier trouvera dans ces documents des informations suffisantes pour fabriquer ou obtenir de tels éléments optiques. Il peut s'agir de lentilles optiques, en particulier de lentilles ophtalmiques non correctrices ou correctrices, dures ou souples.

Cet élément optique possède au moins une cellule ouverte, de préférence plusieurs cellules ouvertes, sur la surface de cet élément. De préférence, les cellules sont juxtaposées les unes aux autres, et sont séparées par des parois intercellulaires parallèles entre elles. De préférence, la plus grande dimension de l'ouverture des cellules est comprise entre 10 et 10 000 µm (micromètres), en particulier entre 50 et 500 µm.

Le fond de chaque cellule peut être plat, concave ou convexe. De préférence, la plus grande valeur de la hauteur de la ou des cellules est compris entre 1 et 100 µm (micromètres), de préférence entre 5 et 50 µm.

L'élément optique peut en outre comprendre un support transparent. Ce support peut être souple ou rigide selon l'utilisation future de l'élément optique. De préférence, le support est choisi dans le groupe constitué par un verre minéral, un verre organique et un film polymère. De préférence, la ou les cellules sont formées sur un substrat en PET, en verre ou en silicium qui est fixé sur le support.

On soumet la surface des cellules, dans une étape b), à un traitement de surface afin d'augmenter sa mouillabilité. De ce fait, on améliore l'adhérence de l'aérogel aux parois de la cellule.

Dans la présente invention, on utilise de préférence un plasma froid de manière à ne pas abîmer les matériaux de l'élément optique par une exposition à une haute température.

Les traitements de surface par plasma sont des techniques bien connues de l'homme du métier. Ils permettent en particulier d'effectuer des dépôts de couches minces, du greffage chimique en surface, ainsi que du nettoyage de surface et de la gravure.

Dans la présente invention, le traitement de surface a pour but d'augmenter la mouillabilité de la surface de la cellule. Cela va avoir pour effet de favoriser l'imprégnation de la cellule par le sol, puis ensuite de permettre une meilleure accroche du gel et de l'aérogel à la cellule.

De préférence, on peut utiliser dans le procédé selon l'invention des plasmas nettoyants (ou dégraissants), et/ou des plasmas greffant des groupements OH en surface. De préférence, le traitement de surface mis en oeuvre à l'étape b) est réalisé avec un plasma d'oxygène à basse pression. Il est également envisagé d'utiliser un traitement Corona, qui est un traitement de type plasma à pression atmosphérique, ou bien un traitement de surface à l'UV/ozone.

L'étape c) du procédé selon l'invention consiste à préparer une solution comprenant :
- un solvant organoaqueux ;
- au moins un polymère organique, soluble dans le dit solvant, dont la masse moléculaire moyenne en poids est supérieure à 10 000 g/mol, de préférence comprise entre 30 000 et 1 000 000 g/mol ;
- au moins un alcoxysilane choisi dans le groupe constitué par les (alkyl en C₁ à C₃)-tri(alcoxy en C₁ à C₃)silanes et les tétra(alcoxy en C₁ à C₃)silanes et leurs mélanges.

De préférence, le solvant organoaqueux est un mélange d'eau et d'un alcool soluble dans l'eau, en particulier un alcool inférieur comme le méthanol, l'éthanol, le propanol et le butanol. De façon plus préférée, le solvant organoaqueux est un mélange eau/éthanol.

Le polymère organique présent dans la solution préparée à l'étape c) est soluble dans le solvant organoaqueux. Sa masse moléculaire moyenne en poids, déterminée par chromatographie d'exclusion stérique (SEC), est supérieure à 10 000 g/mol.

Le polymère organique est de préférence choisi dans le groupe constitué par le polyacétate de vinyle, le poly(alcool vinylique), les copolymères poly(acétate de vinyle-co-alcool vinylique), le polyoxyéthylène, le polyoxypropylène et leurs mélanges. De façon plus préférée, le polymère est le polyacétate de vinyle.

L'alcoxysilane est de préférence le tétraméthoxysilane (TMOS).

De préférence, la solution est agitée pendant une durée suffisante pour que les différents composés soient dissous, par exemple pendant environ 10 minutes.

A la solution obtenue à l'issue de l'étape c), on ajoute un catalyseur d'hydrolyse acide ou basique de façon à obtenir un sol. Ce catalyseur peut être une base forte ou un acide fort. De préférence, dans le procédé selon la présente invention, c'est une base forte qui est utilisée, de préférence une base minérale, comme l'hydroxyde d'ammonium. En effet, l'utilisation d'une base forte plutôt qu'un acide fort permet d'obtenir des aérogels plus transparents. En présence de ce catalyseur, les alcoxysilanes subissent une hydrolyse, suivie d'une réaction de condensation des groupes Si-OH formés.

De façon très préférée, le sol obtenu à l'issue de l'étape d) comprend :
- de 0,5 à 20 % massique de polyacétate de vinyle, de façon préférée de 2 à 15 % massique, de façon plus préférée de 4 à 13 % massique, et de façon encore plus préférée de 6 à 12 % massique,
- de 20 à 60 % massique de tétraméthoxysilane, de façon préférée de 25 et 50 % massique, de façon encore plus préférée de 30 à 45 % massique,
le solvant étant constitué d'un mélange eau/éthanol.

Selon un mode de réalisation de la présente invention, le sol obtenu à l'issue de l'étape d) comprend en outre un additif choisi parmi des particules de silice, de préférence colloïdales, et des particules conductrices, lesdites particules conductrices étant de préférence choisies parmi les particules d'oxyde d'indium et d'étain (ITO), les particules d'oxyde d'étain et les particules métalliques, en particulier les particules d'or ou d'argent.

Lors de l'addition du catalyseur d'hydrolyse, la solution est de préférence maintenue sous une agitation forte. La transition sol-gel a lieu au bout d'un certain temps, qui dépend de nombreux paramètres, parmi lesquels on peut citer la nature et la concentration de l'alcoxysilane et du polymère, la nature et la concentration du catalyseur, la température du sol, l'agitation qui lui est imposée. Le moment où a lieu cette transition est appelé point de gel. La transition sol-gel se traduit par une augmentation soudaine de la viscosité du fluide.

L'étape e) du procédé selon l'invention consiste à déposer le sol dans la cellule avant que le point de gel du sol ne soit atteint et à fermer la cellule remplie à l'aide d'un film. Cette étape e) ne doit jamais être réalisée après le point de gel du sol car celui-ci est alors trop visqueux pour être correctement déposé dans la cellule.

Le sol peut être déposé dans la cellule selon n'importe quelle technique appropriée connue de l'homme du métier. Une technique préférée consiste à déposer une certaine quantité de sol sur l'échantillon, puis à laminer un film sur la surface de la cellule. Une telle technique est par exemple décrite dans la demande de brevet WO 2007 1132116. La cellule est de préférence remplie en totalité par le sol. En outre, si l'élément d'optique comprend plusieurs cellules, il est préférable que celles-ci soient remplies toutes avec la même quantité de sol.

La fermeture de la cellule avec un film permet d'encapsuler le sol en voie de gélification dans la cellule. Le film utilisé pour fermer la cellule est de préférence souple, en particulier s'il est déposé par laminage. Il est imperméable à l'alcool et insoluble dans le solvant du sol. Il s'agit de préférence d'un film polymère, par exemple en PET.

Généralement, la tension superficielle qui s'exerce entre le sol et le film suffit à maintenir le film en place sur la surface de la cellule, et à assurer la fermeture de la cellule. D'autres moyens, par exemple l'utilisation d'une colle ou l'application d'une pression constante, peuvent être mis en oeuvre. Toutefois, le film devant être par la suite retiré, il est exclu de fixer le film de façon définitive. On a constaté que les moyens de fermeture non définitive de la cellule ne permettent généralement pas d'assurer une étanchéité totale aux gaz.

Lors de l'étape f) du procédé selon l'invention, on laisse reposer l'élément optique comprenant le sol encapsulé dans la cellule dans une atmosphère alcoolique durant entre 15 minutes et 5 heures afin d'obtenir la maturation du gel. L'expression « atmosphère alcoolique » désigne une atmosphère saturée en vapeur d'alcool. A cause des potentiels défauts d'étanchéité de fermeture de la cellule, une évaporation du solvant lors de la maturation pourrait avoir lieu. L'utilité de l'atmosphère alcoolique réside dans le fait d'éviter cette évaporation. En effet, un équilibre thermodynamique est obtenu entre la pression de vapeur du solvant du sol en cours de maturation et l'atmosphère alcoolique. Si la fermeture de la cellule était totalement étanche, ce qui n'est généralement pas le cas, alors cette étape f) de maturation pourrait être réalisée, de façon équivalente à l'invention, hors de l'atmosphère alcoolique.

A l'issue de l'étape f) de maturation, on obtient une cellule remplie de gel. Le film fermant la cellule est retiré lors de l'étape g) du procédé selon l'invention dans un milieu alcoolique. Ce milieu alcoolique est liquide. De préférence, le milieu alcoolique est anhydre si l'étape de séchage h) est réalisée avec du CO₂ supercritique car l'eau et le CO₂ liquide ne sont pas miscibles. Il s'agit de préférence d'un bain d'éthanol absolu dans lequel l'élément optique comportant la cellule est plongé. Le gel étant solide, il ne se dissout pas dans l'alcool. Le film est retiré et l'élément optique est ressorti du bain pour être introduit dans un autoclave.

L'étape h) du procédé selon l'invention consiste à effectuer dans un autoclave le séchage supercritique du gel contenu dans la cellule de manière à obtenir un aérogel. De préférence, l'étape de séchage h) est réalisée avec du CO₂ supercritique car les valeurs de température et pression critiques du CO₂ sont basses, évitant ainsi l'endommagement éventuel de l'élément optique par des températures excessives.

L'étape h) de séchage est de préférence décomposée en les différentes sous étapes successives suivantes :
- l'introduction dans l'autoclave de l'élément optique comportant la cellule remplie de gel ;
- l'introduction de CO₂ liquide dans l'autoclave et le remplacement du solvant du gel par le CO₂ liquide ;
- la montée en température et en pression pour atteindre puis dépasser les conditions supercritique du CO₂ (Tc = 31 °C, Pc = 74 bars), de préférence jusqu'à une température comprise entre 34 et 40 °C et jusqu'à une pression comprise entre 80 et 150 bars ;
- la baisse de la pression jusqu'à la pression atmosphérique ;
- la baisse de la température jusqu'à la température ambiante.

Le CO₂ est de préférence introduit dans l'autoclave sous forme liquide. Pour ce faire, et selon les appareils dont on dispose, il peut être utile de refroidir dans un premier temps l'autoclave jusqu'à une température comprise entre 3 et 8 °C, avant d'introduire l'élément optique dans l'autoclave. Puis la pression est augmentée jusqu'à environ 60 bars lors de l'introduction du CO₂ liquide.

A l'issue de l'étape h) de séchage supercritique, un aérogel est obtenu. Cet aérogel ne comporte pas ou très peu de fissures et adhère correctement à la cellule de l'élément optique.

L'aérogel reste cependant un matériau fragile. Plus sa densité est faible, plus il est fragile. De manière à prévenir tout risque de fissuration, le procédé selon l'invention comprend en outre de préférence une étape supplémentaire i) consistant, après l'étape h) de séchage supercritique, à purger avec un gaz anhydre l'autoclave dans lequel le séchage a été réalisé, avant de retirer l'élément optique. Le gaz anhydre peut typiquement être de l'azote ou de l'argon pur. Cette purge a pour but de chasser les dernières traces résiduelles de solvant, en particulier des vapeurs d'alcool et de CO₂, qui pourraient encore se trouver dans les pores de l'aérogel. La purge est effectuée de préférence lentement pour éviter la fissuration de l'aérogel.

En outre, il est possible de compléter le procédé selon la présente invention par une étape j) consistant à placer l'élément optique obtenu à l'issue de l'étape h), ou éventuellement de l'étape i), dans une enceinte où l'humidité de l'atmosphère est contrôlée. Il peut s'agir par exemple d'un dessiccateur sous vide.

L'élément optique susceptible d'être obtenu par le procédé décrit ci-dessus est également un objet de la présente invention. Cet élément optique comprend à sa surface au moins une cellule ouverte remplie d'un aérogel à base de silice comprenant au moins un polymère organique dont la masse moléculaire en poids est supérieure à 10 000 g/mol, de préférence un polyacétate de vinyle. Cet aérogel peut être qualifié d'hybride car il comprend un composé minéral et un composé organique.

L'aérogel selon la présente invention a de façon préférée une porosité supérieure à 75 %, de façon plus préférée supérieure à 80 % et de façon encore plus préférée comprise entre 82 et 95 %. La porosité d'un aérogel peut classiquement être mesurée par adsorption et désorption de gaz ou par porosimétrie au mercure. L'indice de réfraction de cet aérogel peut valoir entre 1,05 et 1,35, de préférence entre 1,1 et 1,25.

L'aérogel ne présente à sa surface pas ou très peu de fissures visibles à l'oeil nu ou par microscope optique.

L'élément optique ainsi obtenu peut être utilisé de diverses manières par l'homme du métier. Il trouve une utilisation particulièrement intéressante lorsque l'aérogel est imprégné par un liquide. La présente invention a également pour objet un procédé d'imprégnation de l'élément optique susceptible d'être obtenu selon le procédé décrit ci-dessus, comprenant une étape consistant à imprégner l'aérogel contenu dans la au moins une cellule de l'élément optique avec un liquide, puis une étape consistant à fermer la cellule imprégnée avec un moyen pour isoler et protéger le contenu de la cellule de l'atmosphère extérieure.

Le liquide est de préférence un liquide ayant une tension de surface faible et/ou une faible pression de vapeur saturante. Il peut être choisi dans le groupe consistant en les liquides ioniques et les huiles, par exemples les huiles siliconées. Dans le cas préféré où l'élément optique comprend plusieurs cellules remplies d'aérogel, il est envisagé d'imprégner les aérogels avec des liquides différents, en particulier avec des liquides n'ayant pas les mêmes indices de réfraction, ou de ne pas imprégner tous les aérogels. De cette manière, il est possible d'obtenir un élément optique dont la surface présente une grande variation spatiale d'indice de réfraction.

Lorsque l'aérogel a été imprégné, la cellule peut être fermée par n'importe quel moyen à la disposition de l'homme du métier pour isoler et protéger le contenu de la cellule de l'atmosphère extérieure. La fermeture de la cellule peut être temporaire, mais est avantageusement définitive. Un moyen préféré consiste à déposer sur la surface de l'élément optique un film polymère enduit de colle. Un autre moyen envisagé consiste à faire polymériser un film sur la surface de l'élément optique. Un procédé de dépôt d'un film polymère est par exemple décrit dans la demande de brevet EP 1 672 394.

L'aérogel fabriqué selon le procédé de la présente invention présente l'avantage de ne pas se fissurer lors de l'imprégnation par un liquide. L'élément optique transparent imprégné susceptible d'être obtenu par le procédé décrit ci-dessus ne présente à sa surface pas ou très peu de fissures visibles à l'oeil nu ou par microscope optique.

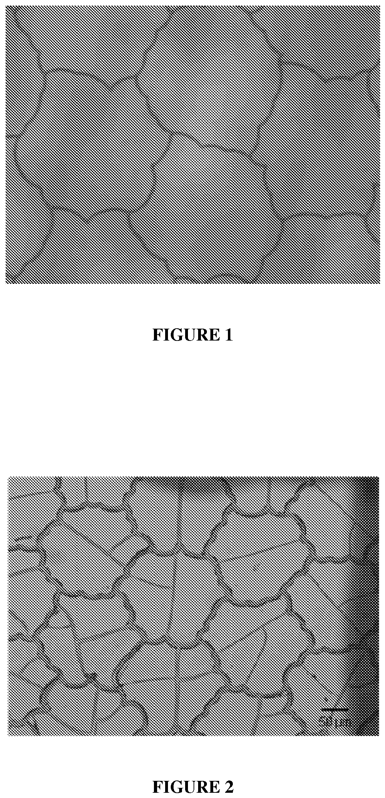

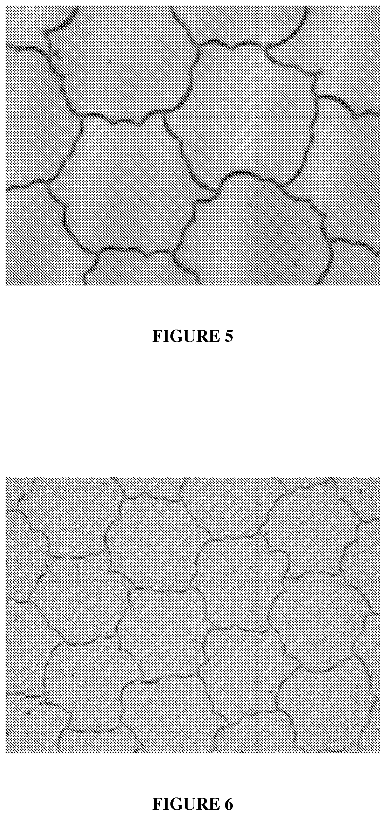

L'invention sera mieux comprise à la lumière des exemples non limitatifs et purement illustratifs suivants, pris en combinaison avec les dessins annexés dans lesquels les figures 1 à 6 sont des photographies réalisées par microscopie optique de plusieurs éléments optiques avant le remplissage des cellules par l'aérogel, puis après le remplissage des cellules avec un aérogel selon différents procédés.

### EXEMPLES

Le procédé selon l'invention a été exemplifié en utilisant des éléments optiques comprenant un substrat en verre ou en PET, collé sur une lame de verre. La surface du substrat est recouverte par un réseau de cellules juxtaposées, de forme hexagonale, dont l'ouverture mesure environ 200 µm. Les cellules sont séparées les unes des autres par des parois de résine photopolymérisable parallèles entre elles et perpendiculaires au substrat mesurant 20 µm de haut.

La figure 1 est une photographie réalisée par microscopie optique de l'élément optique utilisé, sur lequel on peut voir les cellules de forme hexagonale.

### 1°) Exemple comparatif :

De l'éthanol (50 % en volume) et du tétraméthoxysilane (TMOS, 33 % en volume) ont été introduits dans un pilulier sous agitation. Après 10 minutes de mélange, de l'hydroxyde d'ammonium (5.10⁻² mol/l, 17 % en volume) a été ajouté au mélange sous agitation forte. Le temps de gel du sol ainsi formé est d'environ 15 minutes.

Une goutte du sol a été déposée sur l'élément optique, du coté des cellules. Une feuille de film en PET a été posée par dessus, et, à l'aide d'un rouleau, la feuille de film en PET a été laminée sur l'élément optique de manière à encapsuler les cellules. Le laminage a été réalisé moins de 15 minutes après l'ajout de l'hydroxyde d'ammonium dans la solution de TMOS.

L'élément optique comprenant le gel encapsulé dans les cellules a été introduit dans un autoclave. L'autoclave a été refroidi à une température comprise entre 5 et 10 °C. Du CO₂ liquide a alors été introduit dans la chambre de l'autoclave et la pression a été augmentée progressivement pour atteindre 60 bars. Puis la température de l'autoclave a été augmentée jusqu'à la valeur de la température ambiante. Lorsque le CO₂ a remplacé le solvant piégé dans les pores du gel, la pression et la température ont été augmentées jusqu'à atteindre 31,5 °C et 75 bars. Enfin, l'autoclave a été ramené à pression atmosphérique, puis à température ambiante.

L'élément optique a ensuite été sorti de l'autoclave, et le film de PET a été délicatement retiré.

La figure 2 est une photographie réalisée par microscopie optique de l'élément optique comprenant des cellules remplies d'aérogel obtenu par le procédé décrit ci-dessus dans l'exemple comparatif.

On constate que les aérogels de toutes les cellules comprennent des fissures. En outre, on peut voir sur cette figure que les aérogels sont décollés des parois des cellules.

### 2°) Exemple selon l'invention :

L'élément optique comportant les cellules juxtaposées de forme hexagonale a été soumis à un traitement de surface par plasma radiofréquence d'oxygène pendant 90 secondes (débit d'oxygène = 200 ml/minutes, pression = 15 mmHg (soit environ 2 kPa), température ambiante).

On a utilisé un polyacétate de vinyle (PVAc) de masse moléculaire moyenne en masse Mw ≈ 167 000 g/mol (données du fournisseur). Du PVAc a été dissout dans de l'éthanol à 96 %. La dissolution complète du polymère dans le solvant a nécessité 1 à 4 heures de mélange grâce à des ultrasons alternés avec une agitation mécanique vigoureuse. La solution obtenue comprend 1 % massique de PVAc.

Cette solution hydroalcoolique de PVAc (50 % en volume) et du tétraméthoxysilane (TMOS, 33 % en volume) ont été introduits dans un pilulier sous agitation. Après 10 minutes de mélange, de l'hydroxyde d'ammonium (5.10⁻² mol/l, 17 % en volume) a été ajouté au mélange sous agitation forte. Le temps de gel du sol ainsi formé est d'environ 9 minutes.

Une goutte du sol a été déposée sur l'élément optique, du coté des cellules. Une feuille de film en PET a été posée par dessus, et, à l'aide d'un rouleau, la feuille de film en PET a été laminée sur l'élément optique de manière à encapsuler les cellules. Le laminage a été réalisé moins de 9 minutes après l'ajout de l'hydroxyde d'ammonium dans la solution de TMOS et de PVAc.

L'élément optique comprenant le sol encapsulé dans les cellules a été introduit dans une enceinte dont l'atmosphère est saturée en vapeur alcoolique. Le gel a été laissé sous cette atmosphère pendant 2 heures.

L'autoclave a été refroidi à une température comprise entre 5 et 10 °C.

Pendant ce temps, l'élément optique a été immergé dans un bain d'éthanol absolu liquide et le film en PET a été retiré.

L'élément optique comprenant le gel encapsulé dans les cellules a été placé dans l'autoclave refroidi. Du CO₂ liquide a alors été introduit dans la chambre de l'autoclave et la pression a augmenté progressivement pour atteindre 60 bars. Puis la température de l'autoclave a été remontée jusqu'à la valeur de la température ambiante. Lorsque le CO₂ a remplacé le solvant piégé dans les pores du gel, la pression et la température ont été augmentées jusqu'à atteindre 31,5 °C et 75 bars. Enfin, l'autoclave a été ramené à pression atmosphérique, puis à température ambiante.

Avant son ouverture, l'autoclave a été purgée lentement avec de l'argon. L'élément optique a ensuite été sorti de l'autoclave, et placé dans un dessiccateur mis sous vide.

La figure 3 est une photographie réalisée par microscopie optique de l'élément optique comprenant des cellules remplies d'aérogel obtenu par le procédé selon l'invention décrit ci-dessus.

On constate que le décollement de l'aérogel des parois des cellules a quasiment disparu. De même, les fissures visibles sont moindres.

Le même protocole a été suivi pour réaliser trois nouveaux éléments optiques contenant des concentrations de PVAc plus importantes : la concentration de PVAc dans la solution hydroalcoolique de départ, qui était de 1 % massique dans l'exemple ci-dessus, a été fixée à 5 %, puis 10 %, et enfin à 20 % massiques.

La composition des sols réalisés, après ajout du catalyseur d'hydrolyse, est la suivante :

| % massique de PVAc dans la solution d'éthanol à 96% initialement préparée | Composition des sols obtenus après ajout du catalyseur d'hydrolyse | | | |
|---|---|---|---|---|
| | % massique de PVAc | % massique d'éthanol | % massique de TMOS | % massique de solution aqueuse de NH₄OH |
| 1 % | 0,5 | 43,7 | 37,8 | 18,0 |
| 5 % | 2,1 | 43,0 | 37,2 | 17,7 |
| 10 % | 4,2 | 42,1 | 36,4 | 17,3 |
| 20 % | 8,1 | 40,4 | 34,9 | 16,6 |

Les éléments optiques obtenus sont montrées sur les figures 4, 5 et 6, qui sont des photographies réalisées par microscopie optique.

On constate que les aérogels ne présentent plus de fissures visibles et adhèrent aux parois des cellules.

Le module d'Young des différents aérogels obtenus a été mesuré par la technique de nano-indentation, à l'aide d'une pointe en diamant de type Berkovich. La force appliquée a été mesurée et enregistrée en fonction de la profondeur de pénétration. La détermination du module d'Young a été effectuée par la méthode classique d'Oliver et Pharr à partir de la courbe de décharge.

Suivant cette méthode, le module d'Young d'un aérogel obtenu sans PVAc selon le procédé décrit ci-dessus est de 50 MPa. Les inventeurs ont constaté que l'incorporation de PVAc a pour effet d'augmenter de la valeur du module d'Young. A partir de 2,1% massique de PVAc dans le sol, le module d'Young de l'aérogel atteint la valeur de 80 MPa. L'incorporation de PVAc permet donc d'améliorer la résistance à la fissuration de l'aérogel.

### 3°) Test d'imprégnation :

L'élément optique comprenant un aérogel obtenu comme décrit ci-dessus avec une concentration de PVAc dans la solution d'éthanol à 96 % de départ de 20% massiques a été soumis à un test d'imprégnation avec une huile siliconée SilOil® disponible chez Intas Pharmaceutical Ltd. SilOil® est constitué de polydiméthylsiloxane.

On constate que la pénétration de ce liquide n'engendre aucune fissure visible. L'aérogel est donc suffisamment solide pour résister aux forces capillaires provoquées par la pénétration du liquide dans ses pores.

## Revendications

1. Procédé de fabrication d'un élément optique transparent comprenant les étapes successives consistant à :
a) mettre à disposition un élément optique comprenant à sa surface au moins une cellule ouverte ;
b) effectuer un traitement de surface de ladite cellule afin d'augmenter la mouillabilité de sa surface ;
c) préparer une solution comprenant :
- un solvant organoaqueux, de préférence un mélange d'eau et d'un alcool soluble dans l'eau, de façon plus préférée un mélange eau/éthanol ;
- au moins un polymère organique, soluble dans le dit solvant, dont la masse moléculaire moyenne en poids est supérieure à 10 000 g/mol, de préférence comprise entre 30 000 et 1 000 000 g/mol ;
- au moins un alcoxysilane choisi dans le groupe constitué par les (alkyl en C₁ à C₃)-tri(alcoxy en C₁ à C₃)silanes et les tétra(alcoxy en C₁ à C₃)silanes et leurs mélanges ;
d) ajouter un catalyseur d'hydrolyse acide ou basique à la solution de façon à obtenir un sol ;
e) déposer le sol dans la cellule préalablement traitée avant que le point de gel du sol ne soit atteint et fermer la cellule remplie à l'aide d'un film ;
f) laisser reposer l'élément optique dans une atmosphère alcoolique durant entre 15 minutes et 5 heures afin d'obtenir la maturation du gel ;
g) retirer le film fermant la cellule en milieu alcoolique ;
h) effectuer dans un autoclave le séchage supercritique du gel contenu dans la cellule de manière à obtenir un aérogel.

2. Procédé selon la revendication 1, **caractérisé en ce que** l'élément optique, de préférence une lentille optique, comprend plusieurs cellules ouvertes sur la surface de cet élément optique, la plus grande dimension de l'ouverture des cellules étant comprise entre 10 et 10 000 µm (micromètres), de préférence entre 50 et 500 µm.

3. Procédé selon la revendication 1 ou 2, **caractérisé en ce que** le traitement de surface mis en oeuvre à l'étape b) est réalisé avec un plasma d'oxygène à basse pression.

4. Procédé selon l'une quelconque des revendications précédentes, **caractérisé en ce que** le polymère compris dans la solution est choisi dans le groupe constitué par le polyacétate de vinyle, le poly(alcool vinylique), les copolymères poly(acétate de vinyle-co-alcool vinylique), le polyoxyéthylène, le polyoxypropylène et leurs mélanges, de préférence, le polymère est le polyacétate de vinyle.

5. Procédé selon l'une quelconque des revendications précédentes, **caractérisé en ce que** l'alcoxysilane compris dans la solution est le tétraméthoxysilane.

6. Procédé selon l'une quelconque des revendications précédentes, **caractérisé en ce que** le sol obtenu à l'issue de l'étape d) comprend :
- de 0,5 à 20% massique de polyacétate de vinyle, de façon préférée de 2 à 15 % massique,
- de 20 à 60% massique de tétraméthoxysilane,
le solvant étant constitué d'un mélange eau/éthanol.

7. Procédé selon l'une quelconque des revendications précédentes, **caractérisé en ce que** le sol obtenu à l'issue de l'étape d) comprend en outre un additif choisi parmi des particules de silice colloïdales et des particules conductrices, lesdites particules conductrices étant de préférence choisies parmi les particules d'oxyde d'indium et d'étain (ITO), les particules d'oxyde d'étain et les particules métalliques, en particulier les particules d'or ou d'argent.

8. Procédé selon l'une quelconque des revendications précédentes, **caractérisé en ce que** l'étape de séchage h) est réalisée avec du CO₂ supercritique.

9. Procédé selon l'une quelconque des revendications précédentes, **caractérisé en ce qu'**il comprend en outre une étape i) consistant, après l'étape h) de séchage supercritique, à purger avec un gaz anhydre l'autoclave dans lequel le séchage a été réalisé, avant de retirer l'élément optique.

10. Procédé selon l'une quelconque des revendications précédentes, **caractérisé en ce qu'**il comprend en outre une étape j) consistant à placer l'élément optique obtenu à l'issue de l'étape h), ou éventuellement de l'étape i), dans une enceinte où l'humidité de l'atmosphère est contrôlée.

11. Elément optique transparent obtenu par le procédé selon l'une quelconque des revendications 1 à 10.

12. Procédé d'imprégnation de l'élément optique selon la revendication 11, comprenant une étape consistant à imprégner l'aérogel contenu dans la au moins une cellule de l'élément optique avec un liquide, puis une étape consistant à fermer la cellule imprégnée avec un moyen pour isoler et protéger le contenu de la cellule de l'atmosphère extérieure.

13. Elément optique transparent imprégné obtenu par le procédé selon la revendication 12.

## Patentansprüche

1. Verfahren zur Herstellung eines transparenten optischen Elements, umfassend die aufeinanderfolgenden Schritte, die in Folgendem bestehen:
a) Bereitstellen eines optischen Elements, das an seiner Oberfläche wenigstens eine offene Zelle umfasst;
b) Durchführen einer Oberflächenbehandlung der Zelle, um die Benetzbarkeit ihrer Oberfläche zu erhöhen;
c) Zubereiten einer Lösung, umfassend:
- ein organisch-wässriges Lösemittel, vorzugsweise eine Mischung aus Wasser und einem wasserlöslichen Alkohol, stärker bevorzugt eine Wasser/Ethanol-Mischung;
- wenigstens ein organisches Polymer, das in dem Lösemittel löslich ist und dessen gewichtsmittlere Molekülmasse mehr als 10.000 g/mol, vorzugsweise zwischen 30.000 und 1.000.000 g/mol beträgt;
- wenigstens ein Alkoxysilan, ausgewählt aus der Gruppe bestehend aus (C₁-C₃-Alkyl)-tri(C₁-C₃-Alkoxy)silanen und Tetra (C₁-C₃-Alkoxy) silanen und ihren Mischungen;
d) Zugeben eines sauren oder basischen Hydrolysekatalysators zu der Lösung, um ein Sol zu erhalten;
e) Abscheiden des Sols in der vorab behandelten Zelle, bevor der Gelierpunkt des Sols erreicht ist, und Verschließen der gefüllten Zelle mit Hilfe eines Films;
f) Ruhenlassen des optischen Elements in einer alkoholischen Atmosphäre während 15 Minuten bis 5 Stunden, um die Reifung des Gels zu erhalten;
g) Entfernen des die Zelle verschließenden Films in einem alkoholischen Medium;
h) Durchführen einer superkritischen Trocknung des in der Zelle enthaltenen Gels in einem Autoklaven, um ein Aerogel zu erhalten.

2. Verfahren nach Anspruch 1, **dadurch gekennzeichnet, dass** das optische Element, vorzugsweise eine optische Linse, an der Oberfläche dieses optischen Elements mehrere offene Zellen umfasst, wobei die größte Abmessung der Öffnung der Zellen zwischen 10 und 10.000 µm (Mikrometer), vorzugsweise zwischen 50 und 500 µm beträgt.

3. Verfahren nach Anspruch 1 oder 2, **dadurch gekennzeichnet, dass** die in Schritt b) durchgeführte Oberflächenbehandlung mit einem Niederdruck-Sauerstoffplasma ausgeführt wird.

4. Verfahren nach einem der vorhergehenden Ansprüche, **dadurch gekennzeichnet, dass** das in der Lösung enthaltene Polymer aus der Gruppe ausgewählt wird, die aus Polyvinylacetat, Poly(vinylalkohol), Poly(vinylacetat-co-vinylalkohol)-Copolymeren; Polyoxyethylen, Polyoxypropylen und Mischungen davon besteht, wobei das Polymer vorzugsweise Polyvinylacetat ist.

5. Verfahren nach einem der vorhergehenden Ansprüche, **dadurch gekennzeichnet, dass** es sich bei dem in der Lösung enthaltenen Alkoxysilan um Tetramethoxysilan handelt.

6. Verfahren nach einem der vorhergehenden Ansprüche, **dadurch gekennzeichnet, dass** das nach dem Schritt d) erhaltene Sol umfasst:
- von 0,5 bis 20 Massen-%, vorzugsweise von 2 bis 15 Massen-% Polyvinylacetat,
- von 20 bis 60 Massen-% Tetramethoxysilan,
wobei das Lösemittel aus einer Wasser/Ethanol-Mischung besteht.

7. Verfahren nach einem der vorhergehenden Ansprüche, **dadurch gekennzeichnet, dass** das nach dem Schritt d) erhaltene Sol ferner ein Additiv umfasst, das aus kolloidalen Siliciumdioxidpartikeln und leitenden Partikeln ausgewählt ist, wobei die leitenden Partikel vorzugsweise aus Partikeln aus Indiumzinnoxid (ITO), Zinnoxidpartikeln und Metallpartikeln, insbesondere Gold- oder Silberpartikeln, ausgewählt sind.

8. Verfahren nach einem der vorhergehenden Ansprüche, **dadurch gekennzeichnet, dass** der Trocknungsschritt h) mit superkritischem CO₂ durchgeführt wird.

9. Verfahren nach einem der vorhergehenden Ansprüche, **dadurch gekennzeichnet, dass** es ferner einen Schritt i) umfasst, der nach dem Schritt h) des superkritischen Trocknens darin besteht, den Autoklaven, in dem die Trocknung durchgeführt wurde, mit einem wasserfreien Gas zu spülen, bevor das optische Element herausgenommen wird.

10. Verfahren nach einem der vorhergehenden Ansprüche, **dadurch gekennzeichnet, dass** es ferner einen Schritt j) umfasst, der darin besteht, das nach dem Schritt h) oder eventuell dem Schritt i) erhaltene optische Element in einem Gehäuse anzuordnen, in dem die Feuchtigkeit der Atmosphäre gesteuert ist.

11. Transparentes optisches Element, das durch das Verfahren nach einem der Ansprüche 1 bis 10 erhalten wird.

12. Verfahren zum Imprägnieren des optischen Elements nach Anspruch 11, umfassend einen Schritt, der darin besteht, das in der wenigstens einen Zelle des optischen Elements enthaltene Aerogel mit einer Flüssigkeit zu imprägnieren, und anschließend einen Schritt, der darin besteht, die imprägnierte Zelle mit einem Mittel zum Isolieren und Schützen des Inhalts der Zelle gegenüber der äußeren Atmosphäre zu verschließen.

13. Imprägniertes transparentes optisches Element, erhalten durch das Verfahren nach Anspruch 12.

## Claims

1. Process for manufacturing a transparent optical element comprising the successive steps consisting in:
a) providing an optical element comprising, at its surface, at least one open cell;
b) carrying out a surface treatment of said cell in order to increase the wettability of its surface;
c) preparing a solution comprising:
- an organic-aqueous solvent, preferably a mixture of water and of a water-soluble alcohol, more preferably a water/ethanol mixture;
- at least one organic polymer, soluble in said solvent, the weight-average molecular weight of which is greater than 10 000 g/mol, preferably between 30 000 and 1 000 000 g/mol;
- at least one alkoxysilane selected from the group consisting of (C₁ to C₃ alkyl)tri(C₁ to C₃ alkoxy)silanes and tetra(C₁ to C₃ alkoxy)silanes and mixtures thereof;
d) adding an acid or base hydrolysis catalyst to the solution so as to obtain a sol;
e) depositing the sol in the pretreated cell before the gel point of the sol is achieved and sealing the filled cell using a film;
f) leaving the optical element to stand in an alcoholic atmosphere for between 15 minutes and 5 hours in order to obtain the maturation of the gel;
g) removing the film sealing the cell in an alcoholic medium;
h) carrying out, in an autoclave, the supercritical drying of the gel contained in the cell so as to obtain an aerogel.

2. Process according to Claim 1, **characterized in that** the optical element, preferably an optical lens, comprises several open cells on the surface of this optical element, the largest dimension of the opening of the cells being between 10 and 10 000 µm (micrometers), preferably between 50 and 500 µm.

3. Process according to Claim 1 or 2, **characterized in that** the surface treatment carried out in step b) is performed with a low-pressure oxygen plasma.

4. Process according to any one of the preceding claims, **characterized in that** the polymer included in the solution is selected from the group consisting of polyvinyl acetate, polyvinyl alcohol, poly(vinyl acetate-co-vinyl alcohol) copolymers; polyoxyethylene, polyoxypropylene and mixtures thereof, preferably the polymer is polyvinyl acetate.

5. Process according to any one of the preceding claims, **characterized in that** the alkoxysilane included in the solution is tetramethoxysilane.

6. Process according to any one of the preceding claims, **characterized in that** the sol obtained at the end of step d) comprises:
- from 0.5% to 20% by weight, preferably from 2% to 15% by weight, of polyvinyl acetate,
- from 20% to 60% by weight of tetramethoxysilane, the solvent consisting of a water/ethanol mixture.

7. Process according to any one of the preceding claims, **characterized in that** the sol obtained at the end of step d) also comprises an additive selected from colloidal silica particles and conductive particles, said conductive particles preferably being selected from indium tin oxide (ITO) particles, tin oxide particles and metal particles, in particular gold or silver particles.

8. Process according to any one of the preceding claims, **characterized in that** the drying step h) is carried out with supercritical CO₂.

9. Process according to any one of the preceding claims, **characterized in that** it also comprises a step i) consisting, after the supercritical drying step h), in purging the autoclave in which the drying was carried out with an anhydrous gas, before removing the optical element.

10. Process according to any one of the preceding claims, **characterized in that** it also comprises a step j) consisting in placing the optical element obtained at the end of step h), or optionally step i), into a chamber where the humidity of the atmosphere is controlled.

11. Transparent optical element obtained by the process according to any one of Claims 1 to 10.

12. Process for impregnating the optical element according to Claim 11, comprising a step that consists in impregnating the aerogel contained in the at least one cell of the optical element with a liquid, then a step that consists in sealing the impregnated cell with a means for isolating and protecting the contents of the cell from the external atmosphere.

13. Impregnated transparent optical element obtained by the process according to Claim 12.
